# FASCICULE DE BREVET EUROPEEN

(11) **EP 3 382 588 B1**
(45) Date de publication et mention de la délivrance du brevet: **18.09.2019**
(21) Numéro de dépôt: 18165340.3
(22) Date de dépôt: 30.03.2018
(51) Int. Cl.: G06F 21/52, G06F 21/55, H04L 9/00

(54) **PROCÉDÉ DE PROTECTION D'UN DISPOSITIF ÉLECTRONIQUE CONTRE DES ATTAQUES PAR INJECTION DE FAUTE PENDANT L'EXÉCUTION D'UN PROGRAMME**
SCHUTZVERFAHREN EINER ELEKTRONISCHEN VORRICHTUNG GEGEN ANGRIFFE DURCH FEHLER-INJEKTION WÄHREND DER AUSFÜHRUNG EINES PROGRAMMS
METHOD FOR PROTECTING AN ELECTRONIC DEVICE AGAINST FAULT-INJECTION ATTACKS DURING THE EXECUTION OF A PROGRAM

(30) Priorité: 30.03.2017 FR 1752704
(43) Date de publication de la demande: 03.10.2018
(73) Titulaire: Idemia Identity & Security France, 92400 Courbevoie (FR)
(72) Inventeur: SERE, Ahmadou, 92130 Issy Les Moulineaux (FR); PEPIN, Cyrille, 92130 Issy Les Moulineaux (FR); BENCHETRIT, Michel, 92130 Issy Les Moulineaux (FR)
(74) Mandataire: Regimbeau

(56) Documents cités:
- EP-A1- 2 043 017
- FR-A1- 2 864 655
- US-A1- 2006 047 955

## Description

### DOMAINE DE L'INVENTION

La présente invention concerne un procédé d'exécution d'un programme dans un dispositif électronique tel qu'une carte à puce, ainsi qu'un tel dispositif électronique.

L'invention trouve avantageusement application dans le domaine des programmes destinés à être interprétés par une machine virtuelle de haut niveau.

### ETAT DE LA TECHNIQUE

De façon connue, une attaque par injection de faute consiste à perturber l'environnement physique d'un dispositif électronique, de sorte à modifier des données mémorisées par le dispositif. De telles perturbations peuvent être produites de différentes manières : variation d'une tension d'alimentation, variation d'une fréquence d'horloge du dispositif, émission de rayonnement électromagnétique ou laser, etc.

Ces données peuvent par exemple être des instructions de code d'un programme destiné à être exécuté par le dispositif électronique.

Pour protéger un dispositif électronique contre de telles attaques, il a été proposé dans le document US 2006/0047955 A1 de calculer une donnée d'intégrité relative à un bloc d'instructions de code d'un programme, avant qu'une exécution de ce programme ne commence. Ces données d'intégrité sont mémorisées dans une mémoire du dispositif.

Ultérieurement, le programme est lancé par le processeur. Au cours de l'exécution du programme, l'intégrité d'un bloc du programme est contrôlée sur la base de la donnée d'intégrité correspondante, précédemment calculée et mémorisée avant le lancement du programme. Si, à l'issue de ce contrôle, le bloc est considéré comme non intègre, une erreur est signalée.

Or, la durée de la période entre l'instant auquel la donnée d'intégrité est calculée et l'instant ultérieur auquel le contrôle d'intégrité a été mis en oeuvre sur la base de cette donnée d'intégrité peut être longue. Une attaque mise en oeuvre au cours de cette période peut corrompre une donnée d'intégrité mémorisée et/ou le bloc correspondant, rendant inefficace la protection conférée par le procédé du document US 2006/0047955 A1.

### EXPOSE DE L'INVENTION

Un but de l'invention est de protéger plus efficacement les instructions de code d'un programme destiné à être exécuté par un dispositif électronique contre des attaques par injection de faute.

Il est dès lors proposé, selon un premier aspect de l'invention, un procédé d'exécution d'un programme dans un dispositif électronique tel qu'une carte à puce, comprenant des étapes de :
- calcul d'une première donnée d'intégrité relative à un ensemble d'instructions de code du programme, l'ensemble comprenant une seule instruction de code ou une suite d'instructions de code destinées à être exécutées consécutivement,
- après le calcul de la première donnée d'intégrité, exécution d'une dernière instruction de code de l'ensemble par un processeur du dispositif électronique,
- après l'exécution de la dernière instruction de code, contrôle d'intégrité de l'ensemble sur la base de la première donnée d'intégrité calculée, le contrôle d'intégrité comprenant une répétition de l'étape de calcul de sorte à produire une deuxième donnée de contrôle d'intégrité relative à l'ensemble d'instructions de code du programme, et une comparaison entre les deux données de contrôle d'intégrité calculées,
- signalement ou non d'une erreur en fonction d'un résultat de la comparaison, dans lequel la première donnée d'intégrité est calculée au cours de l'exécution du programme.

Le procédé selon ce premier aspect de l'invention peut en outre comprendre les caractéristiques suivantes, prises seules ou en combinaison lorsque cela est techniquement possible.

La première donnée d'intégrité peut être calculée après l'exécution par un processeur du dispositif électronique :
- d'au moins une première instruction de code du programme par un processeur du dispositif électronique, ou
- d'au moins une instruction de code de l'ensemble différente de la dernière instruction de code, ou
- de chaque instruction de code de l'ensemble excepté la dernière instruction de code de l'ensemble.

Le procédé selon le premier aspect de l'invention peut comprendre en outre les étape suivantes :
- après l'exécution de la dernière instruction de code de l'ensemble, vérification d'au moins une condition prédéterminée susceptible d'être remplie ou non par une instruction de code suivante du programme à exécuter après la dernière instruction de code,
- dans lequel le contrôle d'intégrité est mis en oeuvre seulement si au moins une des conditions est remplie, avant une exécution de l'instruction de code suivante par un processeur du dispositif électronique.

Le contrôle d'intégrité de l'ensemble d'instructions de code peut être mis en oeuvre seulement lorsqu'au moins une des conditions suivantes est remplie :
- l'instruction de code suivante soit un branchement,
- l'instruction de code suivante participe, lors de son exécution par un processeur du dispositif électronique, à une communication de données entre le dispositif électronique et un dispositif extérieur au dispositif électronique,
- l'instruction de code suivante participe, lors de son exécution par un processeur du dispositif électronique, à une écriture de données dans une mémoire non volatile 8 du dispositif électronique.

Par ailleurs, le contrôle d'intégrité de l'ensemble d'instructions de code peut en outre être mis en oeuvre lorsque l'instruction de code suivante n'est pas entièrement contenue dans une zone mémoire prédéterminée du dispositif électronique.

Le procédé selon le premier aspect de l'invention peut comprendre en outre les étapes suivantes :
- au cours de l'exécution du programme, calcul d'une donnée d'intégrité relative à une zone mémoire prédéterminée du dispositif électronique contenant l'ensemble d'instructions de code,
- après l'exécution de la dernière instruction de code de l'ensemble, contrôle d'intégrité de la zone mémoire prédéterminée sur la base de la donnée d'intégrité relative à la zone mémoire prédéterminée, de sorte à générer un deuxième résultat,
- signalement ou non d'une erreur en fonction du deuxième résultat.

Après l'exécution de la dernière instruction de code de l'ensemble, il peut être mis en oeuvre une vérification d'au moins une condition prédéterminée susceptible d'être remplie ou non par une instruction de code suivante du programme à exécuter après la dernière instruction de code, auquel cas le contrôle d'intégrité de la zone mémoire prédéterminée est mis en oeuvre seulement si au moins une des conditions prédéterminées est remplie, avant une exécution de l'instruction de code suivante par un processeur du dispositif électronique.

Le contrôle d'intégrité de la zone mémoire prédéterminée peut être mis en oeuvre seulement lorsque le contrôle d'intégrité de l'ensemble d'instructions de code est mis en oeuvre.

Le procédé peut en outre comprendre un chargement de l'ensemble d'instructions de code depuis une zone prédéterminée d'une mémoire non volatile du dispositif électronique vers un cache dans une mémoire volatile du dispositif électronique, dans lequel les étapes de calcul, d'exécution et de contrôle d'intégrité étant alors mises en oeuvre depuis le cache.

Le procédé selon le premier aspect de l'invention peut comprendre en outre une sélection d'un mode d'exécution de l'ensemble d'instructions de code dans une pluralité de modes d'exécution comprenant :
- un mode d'exécution caché, dans lequel le chargement de l'ensemble d'instructions de code dans le cache est mis en oeuvre, et dans lequel les étapes de calcul, d'exécution et de contrôle d'intégrité sont mises en oeuvre depuis le cache, et
- un mode d'exécution non caché, dans lequel les étapes de calcul, d'exécution et de contrôle d'intégrité sont mise en oeuvre directement depuis la zone prédéterminée de la mémoire non volatile.

L'étape de sélection d'un mode d'exécution peut alors être répétée pour au moins une instruction de code du programme qui n'est pas entièrement contenu dans la zone prédéterminée de la mémoire non volatile, le mode d'exécution sélectionné étant variable d'une mise en oeuvre à l'autre.

La sélection du mode d'exécution est par exemple aléatoire.

Le procédé selon le premier aspect de l'invention peut comprendre en outre les étapes suivantes :
- après l'exécution de la dernière instruction de code de l'ensemble, ajout dans l'ensemble d'une instruction de code suivante du programme à exécuter après la dernière instruction de code,
- après l'ajout, répétition itérative des étapes de calcul, d'exécution, et, le cas échéant, de contrôle d'intégrité et de signalement.

Le procédé selon le premier aspect de l'invention peut comprendre en outre les étape suivantes :
- après l'exécution de la dernière instruction de code de l'ensemble, redéfinition de l'ensemble à la seule instruction de code suivante lorsque l'instruction de code suivante n'est pas entièrement contenue dans une zone mémoire prédéterminée du dispositif électronique,
- après la redéfinition de l'ensemble, répétition itérative des étapes de calcul, d'exécution, et, le cas échéant, de contrôle d'intégrité et de signalement.

Le procédé selon le premier aspect de l'invention peut comprendre en outre les étape suivantes :
- mémorisation d'une donnée d'intégrité relative à l'ensemble calculée au cours d'une mise en oeuvre de l'étape de calcul d'instructions de code dans un emplacement mémoire prédéterminé du dispositif électronique,
- mémorisation d'une donnée d'intégrité relative à l'ensemble calculée au cours d'une mise en oeuvre ultérieure de l'étape de calcul à l'emplacement mémoire prédéterminé, de sorte à remplacer la donnée d'intégrité précédemment mémorisée.

Un contrôle d'intégrité de données de référence pour lesquelles une donnée d'intégrité a été précédemment calculée peut comprendre des sous-étapes de :
- répétition de l'étape de calcul précédente de sorte à produire une nouvelle donnée de contrôle d'intégrité relative aux données de référence,
- comparaison entre les deux données de contrôle d'intégrité relatives aux données de référence, une erreur étant signalée seulement si les deux données de contrôle d'intégrité comparées sont identiques.

Les étapes peuvent être mises en oeuvre par une machine virtuelle de haut niveau, telle qu'une machine virtuelle Java Card, le programme étant interprétable par la machine virtuelle de haut niveau.

Il est également proposé, selon un deuxième aspect de l'invention, un produit programme d'ordinateur comprenant des instructions de code de programme pour l'exécution des étapes du procédé selon le premier aspect de l'invention, lorsque ce procédé est exécuté par au moins un processeur.

Ce programme peut être une machine virtuelle de haut niveau.

Il est également proposé, selon un troisième aspect de l'invention, un dispositif électronique, tel qu'une carte à puce, comprenant :
- une mémoire adaptée pour mémoriser un programme comprenant un ensemble d'instructions de code, l'ensemble comprenant une seule instruction de code ou une suite d'instructions de code du programme destinées à être exécutées consécutivement,
- au moins un processeur configuré pour :
   ∘ calculer une donnée d'intégrité relative à l'ensemble d'instructions de code,
   ∘ après le calcul de la donnée d'intégrité, exécuter une dernière instruction de code de l'ensemble par un processeur du dispositif électronique,
   ∘ après l'exécution de la dernière instruction de code, contrôler l'intégrité de l'ensemble d'instructions de code sur la base de la donnée d'intégrité calculée, de sorte à générer un résultat,
   ∘ signaler ou non une erreur en fonction du résultat généré,
dans lequel la donnée d'intégrité est calculée au cours de l'exécution du programme.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente schématiquement un dispositif électronique selon un mode de réalisation de l'invention.
- La figure 2, représente schématiquement une mémoire du dispositif schématiquement représenté en figure 1 contenant un programme cible P destiné à être exécuté par ce dispositif.
- La figure 3 est un organigramme d'étapes du procédé d'exécution d'un programme selon un premier mode de réalisation de l'invention.
- Les figures 4 et 5 représentent le contenu de mémoires du dispositif à des instants différents au cours de la mise en oeuvre du procédé selon le premier mode de réalisation de l'invention.
- La figure 6 est un organigramme d'étapes d'un procédé d'exécution d'un programme selon un deuxième mode de réalisation de l'invention.
- La figure 7 est un organigramme d'étapes d'un procédé d'exécution d'un programme selon un deuxième mode de réalisation de l'invention.
- La figure 8 représente le contenu de mémoires du dispositif au cours de la mise en oeuvre du procédé selon le troisième mode de réalisation de l'invention.
- La figure 9 représente le contenu de mémoires du dispositif au cours de la mise en oeuvre du procédé selon le troisième mode de réalisation de l'invention.

Sur l'ensemble des figures, les éléments similaires portent des références identiques.

### DESCRIPTION DETAILLEE DE L'INVENTION

### Dispositif électronique protégé contre des attaques par injection de faute

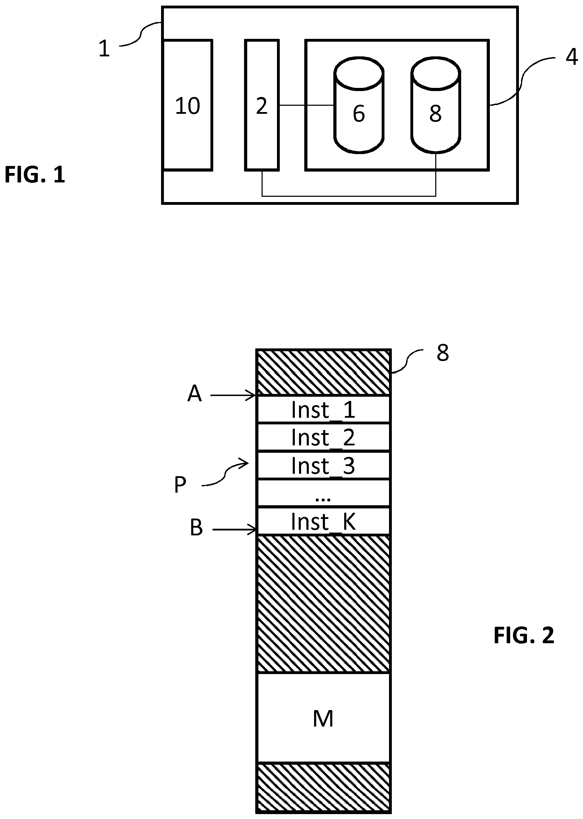

En référence à la **figure 1**, un dispositif électronique 1 comprend au moins un processeur 2 et au moins une mémoire 4.

Le dispositif électronique 1 est par exemple une carte à puce, telle qu'une carte SIM.

Le ou chaque processeur 2 est adapté pour exécuter des instructions de code de programme appartenant à un jeu d'instructions de code prédéterminées, dites dans la suite instructions de code « natives ».

La mémoire 4 comprend au moins une mémoire volatile 6, par exemple de type RAM. La mémoire volatile 6 a pour fonction de mémoriser temporairement des données, par exemple des données calculées par le processeur 2. Le contenu de la mémoire volatile 6 est effacé lors d'une mise hors tension du dispositif électronique 1.

La mémoire 4 comprend en outre au moins une mémoire non volatile 8 (NVM en anglais), par exemple de type disque dur, SSD, flash, EEPROM, etc. La mémoire non volatile 8 a pour fonction de mémoriser des données de manière persistante, au sens où une mise hors tension du dispositif électronique 1 n'efface pas le contenu de la mémoire non volatile 8.

Le dispositif électronique 1 comprend par ailleurs une interface de communication 10 avec un dispositif tiers, extérieur au dispositif électronique 1. Cette interface de communication 10 peut comprendre un circuit de communication sans fil, par exemple une puce NFC, de sorte à établir un canal de communication radio entre le dispositif électronique et le dispositif tiers, et/ou comprendre au moins un port destiné à être mis en contact physique avec au moins un port du dispositif tiers, de sorte que des signaux électriques porteurs de données puissent être transférés entre les ports mis en contact physique.

En référence à la **figure 2**, sont mémorisés dans la mémoire non volatile 8 au moins deux programmes : au moins un programme cible P, et un programme M de contrôle d'intégrité du programme cible P.

Le programme cible P se présente sous la forme d'un fichier binaire ayant une adresse A de début et une adresse de fin B dans la mémoire non volatile 8.

Le programme cible P comprend K instructions de code Inst_1 à Inst K. Chaque instruction de code Inst_i du programme cible P est formée par une séquence de bits dans ce fichier binaire. Le programme cible P comprend notamment une première instruction de code Inst_1, constituant un point d'entrée du programme cible P.

Comme on le verra dans la suite, le programme de contrôle d'intégrité M assure une fonction de contrôle d'intégrité des instructions de code du programme cible P au cours de l'exécution du programme cible P.

Les instructions de code du programme cible P peuvent être natives ou non natives. Lorsque les instructions de code du programme cible P ne sont pas natives, une machine virtuelle de haut niveau est mémorisée dans la mémoire non volatile 8 du dispositif 1. La machine virtuelle de haut niveau est un programme comprenant des instructions de code natives. Une fonction de la machine virtuelle est d'interpréter les instructions de code du programme cible P et de les traduire en instructions de code natives.

Par exemple, la machine virtuelle de haut niveau est une machine virtuelle Java Card. Elle est alors configurée pour interpréter un « bytecode » issue d'un code source dans le langage de programmation Java, qui est un langage de programmation orienté objet.

Le programme de contrôle d'intégrité M peut être la machine virtuelle de haut niveau. La machine virtuelle cumule alors les fonctions précitées d'interprétation/traduction et de contrôle d'intégrité. Ce mode de réalisation non limitatif sera pris en exemple dans la suite de la présente description.

### Procédé de protection contre des attaques par injection de faute (premier mode de réalisation)

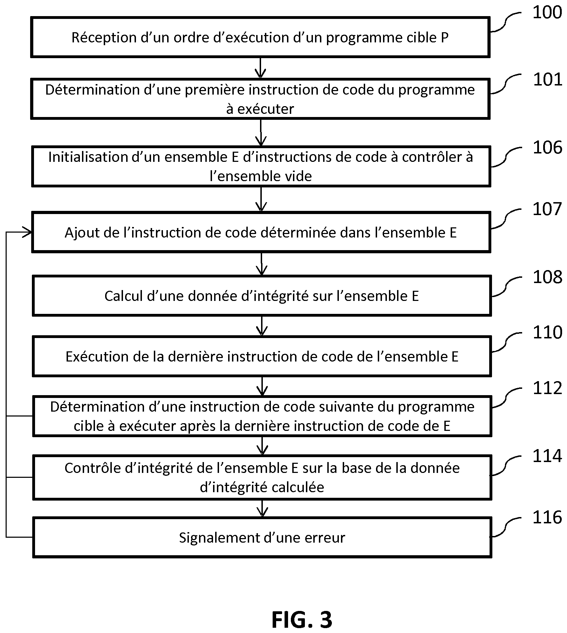

En référence à la **figure 3**, un procédé de protection du dispositif électronique 1 contre des attaques par injection de faute selon un premier mode de réalisation comprend les étapes suivantes.

Le processeur 2 démarre l'exécution de la machine virtuelle M, par exemple lors d'une mise sous tension du dispositif électronique 1.

Ultérieurement, la machine virtuelle M reçoit un ordre de lancement du programme cible P (étape 100). Dans le présent texte, on considère que l'exécution du programme cible P débute lorsqu'un ordre d'exécution est reçu au sein du dispositif électronique 1.

En réponse à la réception de cet ordre, la machine virtuelle M détermine une première instruction de code du programme cible P à exécuter (Inst_1 dans le cas de la figure 2) (étape 101). Cette étape 101 comprend une localisation de l'adresse de début A du programme cible P dans la mémoire non volatile 8 et en particulier de la séquence de bits formant la première instruction de code Inst_1 dans la mémoire non volatile 8.

Par ailleurs, la machine virtuelle M initialise un ensemble E d'instructions de code à l'ensemble vide (étape 106). On verra dans la suite que cet ensemble E est destiné à comprendre des instructions de code du programme cible P dont l'intégrité est à contrôler. Cet ensemble est par exemple représenté par un tableau maintenu par la machine virtuelle M.

La machine virtuelle M ajoute la première instruction de code dans l'ensemble E d'instructions de code (étape 107). Après cet ajout, l'ensemble E ne contient donc qu'un seul élément : la première instruction de code Inst_1.

Les deux étapes 106 et 107 peuvent être combinées en une seule d'étape de réduction de l'ensemble E à un singleton.

Après l'étape 107, la machine virtuelle M calcule une donnée d'intégrité relative à l'ensemble d'instructions de code E (étape 108).

L'étape de calcul de donnée d'intégrité 108 comprend l'application d'une fonction d'intégrité F prédéterminée aux bits de chaque instruction de code comprise dans l'ensemble E. La donnée d'intégrité relative à l'ensemble E est l'image de ces bits par la fonction d'intégrité F.

La fonction d'intégrité F peut être : la fonction identité, une fonction de hachage, une fonction générant un code de redondance longitudinal (« longitudinal redundancy check » ou LRC en anglais), une fonction générant un code de redondance cyclique (« cyclic redundancy check » ou CRC en anglais), etc.

A ce stade, est calculée au cours de l'étape 108 une donnée d'intégrité X1 relative uniquement à la première instruction de code Inst_1, laquelle n'a pas encore été exécutée.

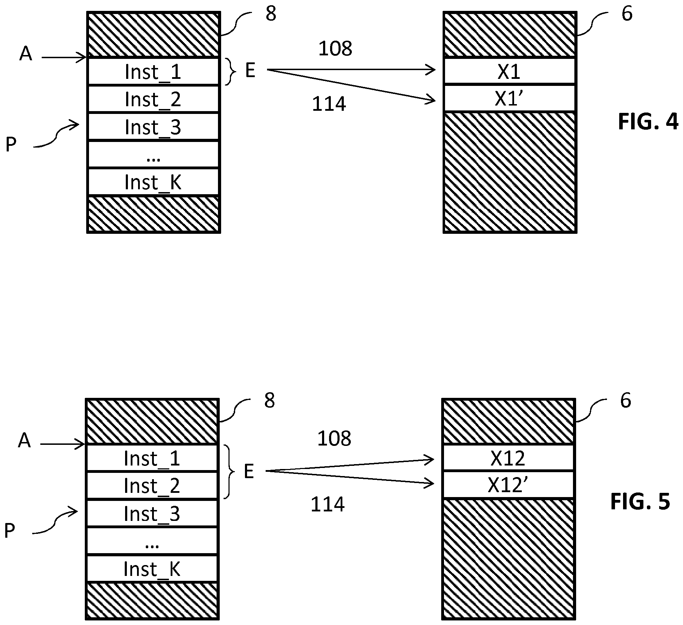

La donnée d'intégrité X1 résultant de ce calcul 108 est mémorisée dans la mémoire 4 à un premier emplacement mémoire. Le premier emplacement mémoire est de préférence dans la mémoire volatile 6 comme représenté en **figure 4** afin, notamment, d'éviter d'user la mémoire non volatile 8 dont la durée de vie dépend d'un nombre d'écritures effectuées dans celle-ci.

Le processeur 2 exécute ensuite la dernière instruction de code de l'ensemble d'instructions de code (étape 110). Par «dernière» instruction de code, on entend l'instruction de code à exécuter en dernier parmi les instructions de code comprises dans l'ensemble E.

A ce stade, l'ensemble E ne comprend que la première instruction de code Inst_1 du programme cible P : la dernière instruction de code de l'ensemble E est donc Inst_1. Au cours de l'étape d'exécution 110, la machine virtuelle M interprète la première instruction de code Inst_1, de sorte à la traduire en au moins une instruction de code native, directement interprétable par le processeur 2, selon une méthode connue en elle-même.

Après l'exécution 110 de la dernière instruction de code de l'ensemble E, la machine virtuelle M détermine une instruction de code suivante du programme cible P, à exécuter juste après la dernière instruction de code de l'ensemble E (étape 112), sans toutefois encore exécuter cette instruction suivante.

Dans la plupart des cas, l'instruction de code suivante est localisée immédiatement en dessous de la dernière instruction de code de l'ensemble E dans la mémoire non volatile 8. Autrement dit, l'adresse de début de l'instruction de code suivante est égale à l'adresse de fin de la dernière instruction de code de l'ensemble E. Toutefois, dans certains cas, l'instruction de code suivante se trouve à une autre adresse. Ce cas se présente par exemple si la dernière instruction de code de l'ensemble E est un branchement. Dans cas, la dernière instruction de code de l'ensemble E comprend des données d'adressage permettant de déterminer l'adresse de l'instruction de code suivante (ces données d'adressage se présentant par exemple sous la forme d'une adresse relative ou offset).

On suppose ici que l'instruction de code suivant l'instruction de code Inst_1 est l'instruction de code Inst_2.

Au cours de l'étape de détermination 112, la machine virtuelle M vérifie si au moins une condition prédéterminée est remplie par l'instruction de code suivante, sans toutefois la faire exécuter par le processeur 2.

Après l'étape de détermination 112 de l'instruction de code suivante, la machine virtuelle M met en oeuvre un contrôle d'intégrité de l'ensemble E d'instructions de code sur la base de la donnée d'intégrité calculée, de sorte à générer un résultat (étape 114).

Le contrôle d'intégrité 114 est mis en en oeuvre lorsque au moins une des conditions prédéterminées est remplie par l'instruction suivante déterminée (ici en fonction de l'instruction de code Inst_2).

Le contrôle d'intégrité 114 est par exemple mis en oeuvre sélectivement lorsqu'il est déterminé, au cours de l'étape de détermination 112 de l'instruction de code suivante, qu'au moins une des conditions suivantes est remplie :
- l'instruction de code suivante participe, lors de son exécution par le processeur 2, à une communication de données entre le dispositif électronique 1 et un dispositif extérieur au dispositif électronique 1,
- l'instruction de code suivante participe, lors de son exécution par le processeur 2, à une écriture de données dans la mémoire non volatile 8 du dispositif électronique 1,
- l'instruction de code suivante est un branchement.

Si aucune de ces conditions n'est remplie, le contrôle d'intégrité 114 de l'ensemble d'instructions de code E n'est pas mis en oeuvre.

Le contrôle d'intégrité 114 de l'ensemble d'instructions de code E comprend des sous-étapes de :
- répétition de l'étape de calcul 108 en appliquant la fonction d'intégrité F à chaque instruction de code de l'ensemble E mémorisée dans la mémoire non volatile 8 (ici la seule instruction de code Inst_1), de sorte à produire une nouvelle donnée d'intégrité X1',
- mémorisation de la nouvelle donnée d'intégrité X1' à un deuxième emplacement mémoire différent du premier emplacement mémoire où se trouve la donnée d'intégrité X1, de préférence dans la mémoire volatile 6 comme montré en figure 4,
- comparaison entre les deux données d'intégrité X1 et X1' calculées.

Lorsque les deux données d'intégrité X1 et X1' sont de valeurs différentes, une erreur est signalée par la machine virtuelle M (étape 116). Il est en effet possible qu'une attaque par injection de faute ait été mise en oeuvre après le lancement du programme ; une telle différence de valeurs entre les deux données comparées peut être causée par la survenance d'une telle attaque.

A titre d'exemple, au cours de l'étape 116, la machine virtuelle M lève une exception de sécurité, cette exception étant indicative d'une telle erreur.

L'erreur est par exemple signalée 116 au sein de la machine virtuelle M (c'est-à-dire par une portion de programme de la machine virtuelle M à une autre portion de programme de la machine virtuelle M) et/ou est signalée par la machine virtuelle M à un programme tiers dans le dispositif électronique et/ou est signalée à un dispositif tiers via l'interface de communication 10.

Aucune erreur n'est signalée lorsque les deux données d'intégrité X1 et X1' sont identiques.

Lorsque l'étape de signalement d'erreur 116 est mise en oeuvre, diverses mesures peuvent être prises : par exemple un arrêt de l'exécution du programme cible P, ou bien une mesure plus radicale, par exemple un arrêt complet du dispositif électronique 1.

Lorsqu'il n'est pas pris de décision d'arrêter l'exécution du programme cible P, la machine virtuelle M répète ensuite l'étape 107 : la machine virtuelle M ajoute dans l'ensemble E l'instruction de code suivante déterminée au cours de l'étape 112. A ce stade, l'ensemble E passe donc d'une seule instruction de code (Inst_1) à une suite de deux instructions destinées à être exécutées consécutivement (Inst_1, Inst_2). Après l'ajout 107, l'instruction de code Inst_2 remplace l'instruction de code Inst_1 en tant que dernière instruction de code dans l'ensemble E.

L'étape de calcul 108 est ensuite répétée : une donnée d'intégrité X12 relative à l'ensemble E constitué de la suite Inst_1, Inst_2 est alors calculée. La donnée d'intégrité X12 est mémorisée au premier emplacement mémoire, de sorte à y remplacer la donnée X1 précédemment calculée, comme cela est représenté en **figure 5****.**

L'étape 110 d'exécution de la dernière instruction de code de l'ensemble E est ensuite répétée : autrement dit, est ici exécutée l'instruction de code Inst_2.

Ensuite, l'étape de détermination 112 d'une instruction suivante du programme cible P à exécuter est à nouveau mise en oeuvre. L'instruction suivante est par exemple Inst_3.

Ensuite, l'étape de contrôle d'intégrité 114 est le cas échéant répétée pour contrôler l'intégrité de l'ensemble E formé par la suite d'instructions consécutives Inst_1 et Inst_2, en fonction de l'instruction de code suivante Inst_3, de sorte à produire un nouveau résultat. Cette nouvelle mise en oeuvre de l'étape de contrôle d'intégrité 114 comprend ainsi :
- une répétition de l'étape de calcul 108 en appliquant la fonction d'intégrité F à l'ensemble E constitué des instructions de code Inst_1 et Inst_2 mémorisées dans la mémoire non volatile 8, de sorte à produire une nouvelle donnée de contrôle d'intégrité X12', et
- mémorisation de la donnée d'intégrité X12' est au deuxième emplacement mémoire, de sorte à y remplacer la donnée X1' calculée au cours de l'étape 108,
- comparaison entre les deux données d'intégrité X12 et X12'.

La première instruction de code Inst_1 a déjà été exécutée par le processeur 2. Par conséquent, la machine virtuelle M effectue un retour en arrière dans le fichier binaire du programme P et relit à nouveau la séquence de bits formant la première instruction de code Inst_1 et lit également la séquence de bits de la deuxième instruction de code Inst_2 pour obtenir la donnée d'intégrité X12.

L'étape de signalement d'erreur 116 est répétée le cas échéant, c'est-à-dire mise en oeuvre sélectivement lorsque les données d'intégrité X12 et X12' sont de valeurs différentes.

Les étapes 107, 108, 110, 112, et, le cas échant 114 voire 116 sont ensuite répétées par la machine virtuelle M pour chaque instruction de code suivante du programme cible P. A chaque nouvelle mise en oeuvre de l'étape de calcul 108, est calculée une donnée d'intégrité relative à un ensemble E d'instructions de code du programme P de plus en plus grand.

Il est possible de répéter les étapes 107 et suivantes jusqu'à une terminaison du programme cible P.

Une telle terminaison survient par exemple lorsqu'il est déterminé au cours d'une mise en oeuvre de l'étape 112 qu'il n'existe pas d'instruction de code suivante du programme cible P à exécuter, ou bien lorsqu'il est reçu par la machine virtuelle M un ordre de terminaison du programme cible P.

### Procédé de protection contre des attaques par injection de faute (deuxième mode de réalisation)

Dans le premier mode de réalisation, l'ensemble E d'instructions de code dont l'intégrité est contrôlée ne fait que croître au cours de l'exécution du programme cible P.

Dans un deuxième mode de réalisation, les étapes additionnelles suivante sont mises en oeuvre afin de limiter la taille de cet ensemble E, et par conséquent réduire la durée maximale de mise en oeuvre des étapes de calcul 108 et de contrôle d'intégrité 114.

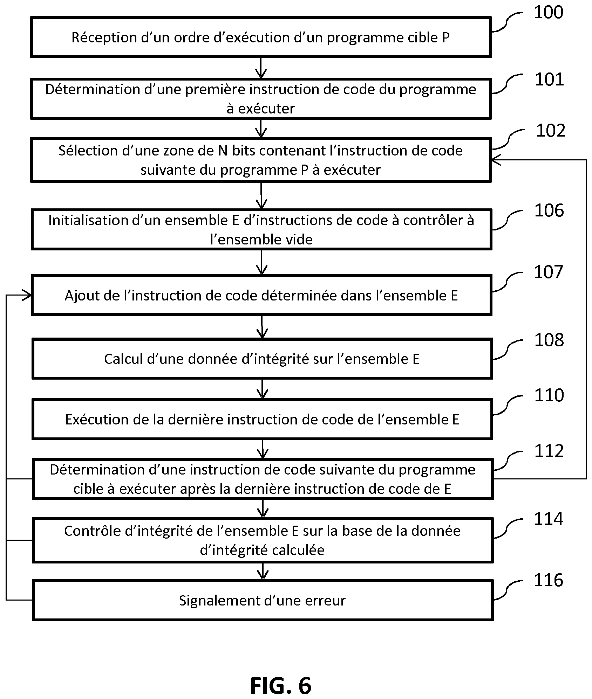

En référence à la **figure 6****,** la machine virtuelle M sélectionne une zone de la mémoire non volatile 8 ayant une taille prédéterminée de N bits, cette zone contenant l'instruction de code suivante du programme cible P à exécuter (étape 102). Typiquement, la zone sélectionnée a pour adresse de début l'adresse de début de l'instruction de code suivante à exécuter.

Cette étape 102 est mise en oeuvre pour la première fois après l'étape 101 au cours de laquelle la première instruction de code du programme cible P a été déterminée (Inst_1). La zone alors sélectionnée comprend l'instruction Inst_1, qui est la suivante à exécuter.

Lorsqu'il est déterminé ultérieurement, au cours d'une mise en oeuvre de l'étape 112, qu'une instruction de code suivante à exécuter juste après la dernière instruction de code de l'ensemble E n'est pas comprise dans la zone sélectionnée de N bits, ou n'est que partiellement contenue dans cette zone, alors la machine virtuelle M répète l'étape 102 : elle sélectionne une nouvelle zone de la mémoire non volatile 8 de taille N contenant l'instruction suivante à exécuter déterminée au cours de la dernière mise en oeuvre de l'étape 112.

L'étape d'initialisation 106 est répétée pour vider l'ensemble E, puis l'étape 107, durant laquelle l'instruction suivante à exécuter est ajoutée dans l'ensemble E. Autrement dit, l'ensemble E est réduit à la seule instruction suivante du programme cible P à exécuter par application des étapes 106 et 107.

Les étapes 108, 110, 112, et, le cas échéant l'étape 114, voire l'étape 116, sont répétées comme dans le premier mode de réalisation jusqu'à ce qu'il soit nécessaire de sélectionner une nouvelle zone dans la mémoire non volatile 8.

### Procédé de protection contre des attaques par injection de faute (troisième mode de réalisation)

Dans le premier mode et le deuxième mode de réalisation décrits précédemment, la machine virtuelle M met en oeuvre les étapes de calcul 108, d'exécution 110 de détermination 112 et de contrôle d'intégrité 114 directement depuis la mémoire non volatile 8.

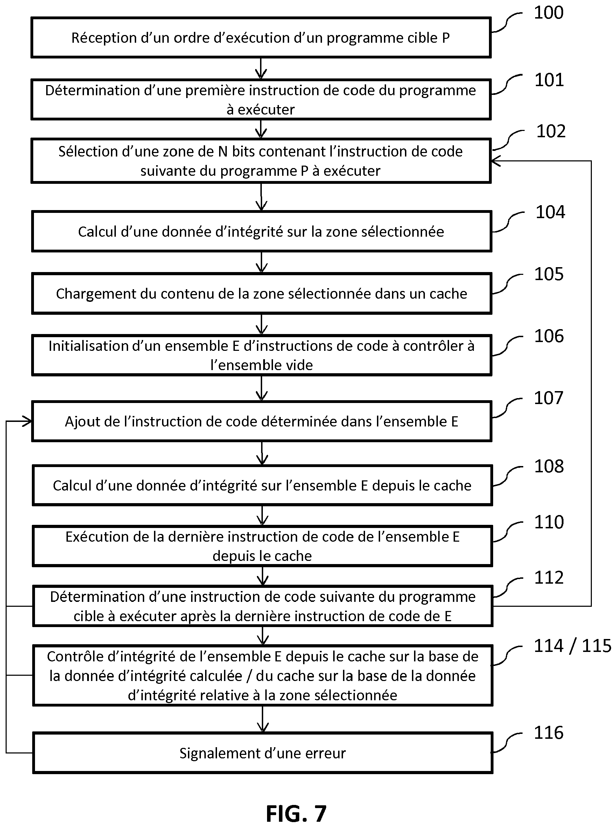

En référence à la **figure 7****,** un troisième mode de réalisation du procédé diffère du deuxième mode de réalisation précédemment décrit par les caractéristiques supplémentaires suivantes.

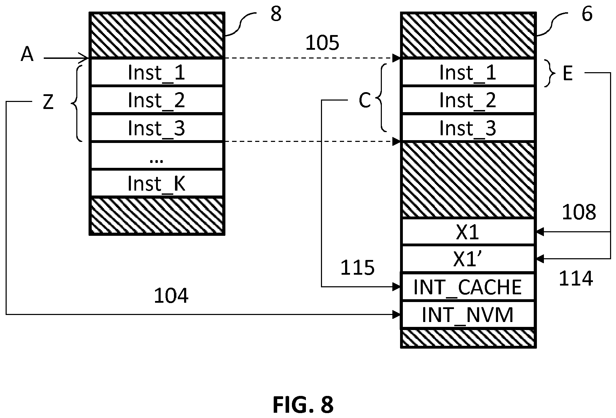

Après avoir sélectionné dans la mémoire non volatile 8 une zone Z de N bits au cours de l'étape 102, la machine virtuelle M calcule une donnée d'intégrité INT_NVM relative à cette zone Z sélectionnée (étape 104). Dans l'exemple représenté en **figure 8****,** la zone Z sélectionnée comprend uniquement les instructions de code Inst_1, Inst_2, et Inst_3.

L'étape de calcul 104 comprend l'application d'une fonction d'intégrité G prédéterminée aux N bits de la zone Z sélectionnée. La donnée d'intégrité INT_NVM est l'image de cette séquence de bits par la fonction d'intégrité F. La fonction d'intégrité G est identique ou différente de la fonction d'intégrité F.

La donnée d'intégrité INT_NVM est mémorisée à un troisième emplacement mémoire différent du premier emplacement et du deuxième emplacement. Le troisième emplacement est de préférence en mémoire volatile 6, comme cela est montré en figure 8.

Après l'étape de calcul 104, le contenu de la zone Z sélectionnée est chargé dans un cache C en mémoire volatile 6 (étape 105).

La taille du cache C est identique à celle de la zone Z sélectionnée (N bits).

Le cache C a été précédemment alloué en mémoire volatile 6 au cours d'une étape préliminaire. Cette allocation est par exemple déclenchée après la mise en oeuvre de l'étape de calcul 104 de la donnée d'intégrité INT_NVM, ou bien sur réception par la machine virtuelle M de l'ordre de lancement du programme cible P, ou bien auparavant, lors du lancement de la machine virtuelle M ou bien encore auparavant, lors d'un démarrage du dispositif électronique 1.

Les étapes 107, 108, 110, 112, et, le cas échant 114 voire 116 sont répétées comme dans le deuxième mode de réalisation jusqu'à ce qu'il soit nécessaire de sélectionner une nouvelle zone Z dans la mémoire non volatile 8, aux différences suivantes près.

Les étapes 108, 110, 112, 114 sont mises en oeuvre depuis le cache C. L'ensemble E désigne des instructions de code chargées dans le cache C. En particulier :
- l'étape de calcul 108 prend comme donnée d'entrée les instructions de code se trouvant dans le cache C : par exemple, la donnée X1 est calculée à partir des bits de l'instruction Inst_1 qui est présente dans le cache C.
- l'étape d'exécution 110 d'une instruction de code du programme cible P est faite en lisant cette instruction depuis le cache C (ce qui suppose que cette instruction a bel et bien été copiée dans le cache C).
- La nouvelle donnée d'intégrité calculée au cours de l'étape de contrôle d'intégrité 114 est calculée sur la base de la ou des instructions de code se trouvant dans le cache C et qui sont comprises dans l'ensemble E.

Par ailleurs, dans ce troisième mode de réalisation, l'étape de contrôle d'intégrité 114 est mise en oeuvre sélectivement lorsqu'il est déterminé au cours de l'étape de détermination 112 qu'au moins une des conditions suivantes est remplie :
- l'instruction de code suivante participe, lors de son exécution par le processeur, à une communication de données entre le dispositif électronique et un dispositif extérieur au dispositif électronique,
- l'instruction de code suivante participe, lors de son exécution par le processeur, à une écriture de données dans une mémoire non volatile 8 du dispositif électronique,
- l'instruction de code suivante n'est pas présente dans le cache C ou n'est que partiellement dans le cache C.

Si aucune de ces conditions n'est remplie, le contrôle d'intégrité 114 n'est pas mis en oeuvre.

Par ailleurs, dans ce troisième mode de réalisation, la machine virtuelle M met en oeuvre un contrôle d'intégrité du contenu du cache C sur la base de la donnée d'intégrité INT_NVM précédemment calculée au cours de l'étape 104 (étape 115), de sorte à générer un deuxième résultat.

Une erreur est signalée ou non en fonction de ce deuxième résultat généré, d'une façon similaire à l'étape 116.

Le contrôle d'intégrité 115 comprend des sous-étapes similaires à celles du contrôle d'intégrité 114 :
- une répétition de l'étape de calcul 104 en appliquant la fonction d'intégrité G à l'ensemble des N bits contenus dans le cache C, de sorte à produire une nouvelle donnée de contrôle d'intégrité INT_CACHE,
- mémorisation de la donnée INT_CACHE à un quatrième emplacement mémoire différent des premiers, deuxième et troisième emplacements mémoires précédemment discutés, et de préférence en mémoire volatile 6,
- comparaison entre les données d'intégrité INT_NVM et INT_CACHE.

Une erreur est sélectivement signalée lorsque les données comparées INT_NVM et INT_CACHE sont différentes.

Il est possible que certaines instructions de code du programme cible P, pourtant bien présentes dans le cache C, n'aient pas été exécutées car ont été sautées à cause d'une instruction de branchement exécutée depuis le cache C. C'est la raison pour laquelle les deux contrôles d'intégrité 114 et 115 ici mis en oeuvre ne sont pas forcément relatifs aux mêmes données : dans un cas, ces données sont les N bits consécutifs présents dans le cache C, et dans l'autre cas, il s'agit de seulement certains bits présents dans le cache C, ne couvrant que les instructions de code chargées dans le cache C qui sont référencées dans l'ensemble E.

Lorsqu'il est déterminé que l'instruction de code suivante n'est pas dans le cache C ou n'est que partiellement dans le cache C, alors la machine virtuelle M répète l'étape 102, c'est-à-dire sélectionne une nouvelle zone Z de N bits dans la mémoire non volatile 8.

L'étape de chargement 105 est ensuite répétée pour la nouvelle zone Z sélectionnée, de même que les étapes suivantes 106, 107, 108, 110, 112, etc.

Le troisième mode de réalisation offre un niveau de sécurité accru par rapport au premier mode de réalisation et au deuxième mode de réalisation.

### Procédé de protection contre des attaques par injection de faute (quatrième mode de réalisation)

Le premier mode de réalisation et le deuxième mode de réalisation mettent en oeuvre un mode d'exécution « non caché » du programme, c'est-à-dire qu'aucun cache C en mémoire volatile 6 n'est utilisé. *A contrario*, le troisième mode de réalisation met en oeuvre un mode d'exécution « caché » du programme, au travers du cache C alloué dans la mémoire volatile 6.

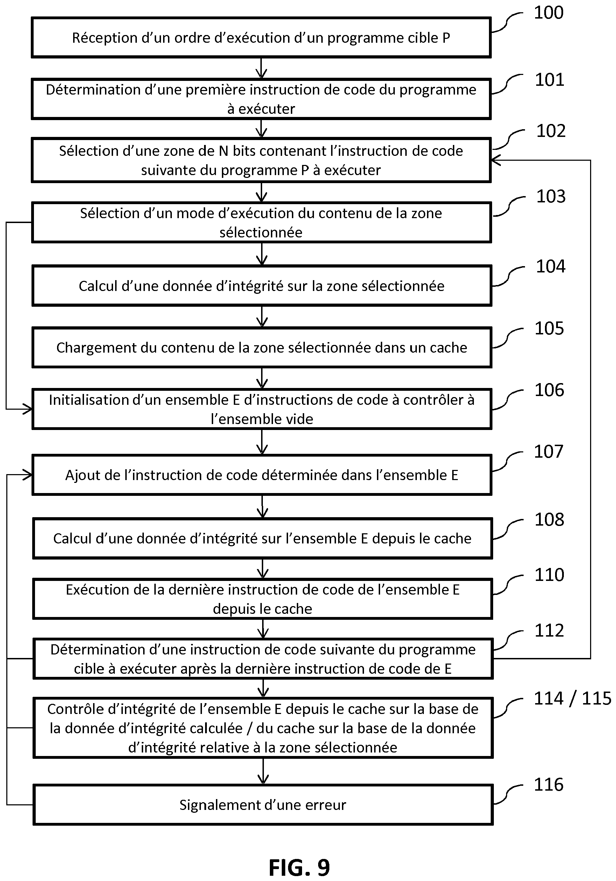

Ces deux modes d'exécution différents peuvent être combinées dans un quatrième mode de réalisation pour exécuter différentes portions du programme cible P, dont les étapes sont représentées sur l'organigramme de la **figure 9****.**

L'étape de sélection 102 d'une zone Z de N bits est mise en oeuvre comme dans le deuxième mode de réalisation.

La machine virtuelle M sélectionne par ailleurs un mode d'exécution du contenu de cette zone Z de N bits, parmi le mode d'exécution caché et le mode d'exécution non caché (étape 103).

Si le mode d'exécution non caché est sélectionné au cours de l'étape 103, le procédé met en oeuvre l'étape 106 et les suivantes sont mises en oeuvre sur la portion du programme cible P contenu dans la zone Z de N bits sélectionnée, comme dans le deuxième mode de réalisation, et ce jusqu'à ce qu'il soit déterminé au cours d'une mise en oeuvre de l'étape 112 qu'une instruction suivante de code du programme cible P à exécuter n'est pas ou n'est que partiellement dans la zone Z de N bits sélectionnée.

Si le mode d'exécution caché est sélectionné au cours de l'étape 103, le procédé met en oeuvre les étapes 104 et 105 avant de mettre en oeuvre les étapes 106 et suivantes, comme dans le troisième mode de réalisation, et ce jusqu'à ce qu'il soit déterminé au cours d'une mise en oeuvre de l'étape 112 qu'une instruction suivante de code du programme cible P à exécuter n'est pas ou n'est que partiellement dans le cache C.

Lorsque la machine virtuelle M sélectionne une nouvelle zone Z de N bits contenant une autre portion du programme cible P à exécuter, la machine virtuelle M répète également l'étape 103, c'est-à-dire qu'elle sélectionne un mode d'exécution pour exécuter cette autre portion du programme cible P.

La sélection 103 du mode d'exécution est variable d'une portion du programme cible P à l'autre.

De préférence, la sélection d'un mode d'exécution 103 est aléatoire. En variante, les deux modes d'exécution caché et non caché sont sélectionnés 103 en alternance (autrement dit, le mode d'exécution d'une portion donnée est toujours différent du mode d'exécution d'une portion suivante du programme cible P).

Le quatrième mode de réalisation offre un niveau de sécurité accru par rapport au troisième mode de réalisation. Il est en effet plus difficile pour un attaquant de savoir où sont les données lues par la machine virtuelle M (cache C ou zone Z) au cours du temps, et donc de les corrompre par une attaque d'injection de faute.

## Revendications

1. Procédé d'exécution d'un programme (P) dans un dispositif électronique (1) tel qu'une carte à puce, comprenant des étapes de :
• calcul (108) d'une première donnée d'intégrité (X1, X12) relative à un ensemble (E) d'instructions de code du programme (P), l'ensemble (E) comprenant une seule instruction de code (Inst_1) ou une suite d'instructions de code (P) destinées à être exécutées consécutivement (Inst_1, Inst_2),
• après le calcul (108) de la première donnée d'intégrité, exécution (110) d'une dernière instruction de code de l'ensemble (E) par un processeur (2) du dispositif électronique (1),
• après l'exécution de la dernière instruction de code, contrôle d'intégrité (114) de l'ensemble (E) sur la base de la première donnée d'intégrité (X1, X12) calculée, le contrôle d'intégrité comprenant une répétition de l'étape de calcul (108) de sorte à produire une deuxième donnée de contrôle d'intégrité (X1', X12') relative à l'ensemble (E) d'instructions de code du programme (P), et une comparaison entre les deux données de contrôle d'intégrité calculées,
• signalement (116) ou non d'une erreur en fonction d'un résultat de la comparaison,
le procédé étant **caractérisé en ce que** la première donnée d'intégrité est calculée (108) au cours de l'exécution du programme (P).

2. Procédé selon la revendication précédente, dans lequel la première donnée d'intégrité (X12) est calculée (108) après l'exécution par un processeur (2) du dispositif électronique (1):
• d'au moins une première instruction de code du programme (P) par un processeur (2) du dispositif électronique (1), ou
• d'au moins une instruction de code (Inst_1) de l'ensemble (E) différente de la dernière instruction de code (Inst_2), ou
• de chaque instruction de code (Inst_1) de l'ensemble (E) excepté la dernière instruction de code (Inst_2) de l'ensemble (E).

3. Procédé selon l'une des revendications précédentes, comprenant :
• après l'exécution de la dernière instruction de code (Inst_2) de l'ensemble (E), vérification (112) d'au moins une condition prédéterminée susceptible d'être remplie ou non par une instruction de code suivante (Inst_3) du programme (P) à exécuter après la dernière instruction de code (Inst_2),
• dans lequel le contrôle d'intégrité (114) est mis en oeuvre seulement si au moins une des conditions est remplie, avant une exécution de l'instruction de code suivante (Inst_3) par un processeur (2) du dispositif électronique (1).

4. Procédé selon la revendication précédente, dans lequel le contrôle d'intégrité (114) de l'ensemble (E) d'instructions de code (E) est mis en oeuvre lorsque l'instruction de code suivante (Inst_3) :
• est un branchement, ou
• participe, lors de son exécution par un processeur (2) du dispositif électronique (1), à une communication de données entre le dispositif électronique (1) et un dispositif extérieur au dispositif électronique (1), ou
• participe, lors de son exécution par un processeur (2) du dispositif électronique, à une écriture de données dans une mémoire non volatile (8) du dispositif électronique.

5. Procédé selon l'une des revendications 3 à 4, dans lequel le contrôle d'intégrité (114) de l'ensemble (E) d'instructions de code (E) est mis en oeuvre lorsque l'instruction de code suivante (Inst_3) n'est pas entièrement contenue dans une zone mémoire prédéterminée (Z, C) du dispositif électronique (1).

6. Procédé selon l'une des revendications précédentes, comprenant en outre des étapes de
• au cours de l'exécution du programme (P), calcul (104) d'une donnée d'intégrité (INT_NVM) relative à une zone mémoire prédéterminée (Z, C) du dispositif électronique (1) contenant l'ensemble (E) d'instructions de code,
• après l'exécution (110) de la dernière instruction de code (Inst_2) de l'ensemble (E), contrôle d'intégrité (115) de la zone mémoire prédéterminée (Z, C) sur la base de la donnée d'intégrité (INT_NVM) relative à la zone mémoire prédéterminée (Z, C), de sorte à générer un deuxième résultat,
• signalement (116) ou non d'une erreur en fonction du deuxième résultat.

7. Procédé selon la revendication précédente, comprenant, après l'exécution de la dernière instruction de code (Inst_2) de l'ensemble (E), vérification (112) d'au moins une condition prédéterminée susceptible d'être remplie ou non par une instruction de code suivante (Inst_3) du programme (P) à exécuter après la dernière instruction de code (Inst_2), dans lequel le contrôle d'intégrité (115) de la zone mémoire prédéterminée (Z, C) est mis en oeuvre seulement si au moins une des conditions prédéterminées est remplie, avant une exécution de l'instruction de code suivante (Inst_3) par un processeur (2) du dispositif électronique (1).

8. Procédé selon l'une des revendications 6 à 7, dans lequel le contrôle d'intégrité (115) de la zone mémoire prédéterminée (Z, C) est mis en oeuvre seulement lorsque le contrôle d'intégrité (114) de l'ensemble (E) d'instructions de code est mis en oeuvre.

9. Procédé selon l'une des revendications précédentes, comprenant un chargement (105) de l'ensemble (E) d'instructions de code depuis une zone prédéterminée (Z) d'une mémoire non volatile (8) du dispositif électronique (1) vers un cache (C) dans une mémoire volatile (6) du dispositif électronique (1), dans lequel les étapes de calcul (108), d'exécution (110) et de contrôle d'intégrité (114) sont mise en oeuvre depuis le cache (C).

10. Procédé selon la revendication précédente, comprenant une sélection (103) d'un mode d'exécution de l'ensemble (E) d'instructions de code parmi une pluralité de modes d'exécution comprenant :
• un mode d'exécution caché, dans lequel le chargement (105) de l'ensemble (E) d'instructions de code dans le cache (C) est mis en oeuvre, et dans lequel les étapes de calcul (108), d'exécution (110) et de contrôle d'intégrité (114, 115) sont mises en oeuvre depuis le cache (C), et
• un mode d'exécution non caché, dans lequel les étapes de calcul (108), d'exécution (110) et de contrôle d'intégrité (114, 115) sont mise en oeuvre directement depuis la zone prédéterminée (Z) de la mémoire non volatile (8).

11. Procédé selon la revendication précédente, comprenant une répétition de l'étape de sélection (103) d'un mode d'exécution pour au moins une instruction de code du programme (P) qui n'est pas entièrement contenu dans la zone prédéterminée (Z) de la mémoire non volatile (8), le mode d'exécution sélectionné étant variable d'une mise en oeuvre à l'autre.

12. Procédé selon l'une des revendications 10 à 11, dans lequel la sélection (103) du mode d'exécution est aléatoire.

13. Procédé selon l'une des revendications précédentes, comprenant en outre des étapes de
• après l'exécution (110) de la dernière instruction de code (Inst_2) de l'ensemble (E), ajout dans l'ensemble (E) d'une instruction de code suivante (Inst_3) du programme (P) à exécuter après la dernière instruction de code (Inst_2),
• après l'ajout (107), répétition itérative des étapes de calcul (108), d'exécution (110), et, le cas échéant, de contrôle d'intégrité (114) et de signalement (116).

14. Procédé selon l'une des revendications précédentes, comprenant en outre des étapes de
• après l'exécution (110) de la dernière instruction de code (Inst_2) de l'ensemble (E), redéfinition (106, 107) de l'ensemble (E) à la seule instruction de code suivante (Inst_3) lorsque l'instruction de code suivante (Inst_3) n'est pas entièrement contenue dans une zone mémoire prédéterminée (Z, C) du dispositif électronique (1),
• après la redéfinition (106, 107) de l'ensemble (E), répétition itérative des étapes de calcul (108), d'exécution (110), et, le cas échéant, de contrôle d'intégrité (114) et de signalement (116).

15. Procédé selon l'une des revendications 13 à 14, comprenant des étapes de :
• mémorisation d'une donnée d'intégrité (X1) relative à l'ensemble (E) calculée au cours d'une mise en oeuvre de l'étape de calcul (108) d'instructions de code dans un emplacement mémoire prédéterminé du dispositif électronique (1),
• mémorisation d'une donnée d'intégrité (X12) relative à l'ensemble (E) calculée au cours d'une mise en oeuvre ultérieure de l'étape de calcul (108) à l'emplacement mémoire prédéterminé, de sorte à remplacer la donnée d'intégrité (X1) précédemment mémorisée.

16. Procédé selon l'une des revendications précédentes, dont les étapes sont mises en oeuvre par une machine virtuelle de haut niveau, telle qu'une machine virtuelle Java Card, le programme (P) étant interprétable par la machine virtuelle de haut niveau.

17. Produit programme d'ordinateur (M), par exemple de type machine virtuelle de haut niveau, comprenant des instructions de code de programme (P) pour l'exécution des étapes du procédé selon l'une des revendications précédentes, lorsque ce procédé est exécuté par au moins un processeur (2).

## Patentansprüche

1. Verfahren zum Ausführen eines Programms (P) in einer elektronischen Vorrichtung (1), wie etwa einer Chipkarte, umfassend Schritte des:
- Berechnens (108) von ersten Integritätsdaten (X1, X12), die sich auf einen Satz (E) von Codeanweisungen des Programms (P) beziehen, wobei der Satz (E) eine einzige Codeanweisung (Inst_1) oder eine Folge von Codeanweisungen (P) umfasst, die dazu bestimmt sind, nacheinander (Inst_1, Inst_2) ausgeführt zu werden,
- nach dem Berechnen (108) der ersten Integritätsdaten, Ausführens (110) einer letzten Codeanweisung des Satzes (E) durch einen Prozessor (2) der elektronischen Vorrichtung (1),
- nach dem Ausführen der letzten Codeanweisung, Prüfens der Integrität (114) des Satzes (E) auf der Basis der berechneten ersten Integritätsdaten (X1, X12), wobei die Integritätsprüfung eine Wiederholung des Berechnungsschritts (108) umfasst, um zweite Integritätsprüfdaten (X1', X12'), die sich auf den Satz (E) von Codeanweisungen des Programms (P) beziehen, und einen Vergleich zwischen den zwei berechneten Integritätsprüfdaten zu produzieren,
- Signalisierens (116) oder Nichtsignalisierens eines Fehlers in Abhängigkeit von einem Ergebnis des Vergleichs, wobei das Verfahren **dadurch gekennzeichnet ist, dass** die ersten Integritätsdaten im Laufe der Ausführung des Programms (P) berechnet (108) werden.

2. Verfahren nach dem vorstehenden Anspruch, wobei die ersten Integritätsdaten (X12) berechnet (108) werden nach dem Ausführen, durch einen Prozessor (2) der elektronischen Vorrichtung (1):
- von mindestens einer ersten Codeanweisung des Programms (P) durch einen Prozessor (2) der elektronischen Vorrichtung (1), oder
- von mindestens einer Codeanweisung (Inst_1) des Satzes (E), die sich von der letzten Codeanweisung (Inst_2) unterscheidet, oder
- von jeder Codeanweisung (Inst_1) des Satzes (E) mit Ausnahme der letzten Codeanweisung (Inst_2) des Satzes (E).

3. Verfahren nach einem der vorstehenden Ansprüche, umfassend:
- nach dem Ausführen der letzten Codeanweisung (Inst_2) des Satzes (E), Überprüfen (112) von mindestens einer vorbestimmten Bedingung, die von einer folgenden Codeanweisung (Inst_3) des Programms (P), die nach der letzten Codeanweisung (Inst_2) ausgeführt werden soll, erfüllt werden kann oder nicht,
- wobei die Integritätsprüfung (114) nur dann umgesetzt wird, wenn vor einem Ausführen der folgenden Codeanweisung (Inst_3) durch einen Prozessor (2) der elektronischen Vorrichtung (1) mindestens eine der Bedingungen erfüllt ist.

4. Verfahren nach dem vorstehenden Anspruch, wobei die Integritätsprüfung (114) des Satzes (E) von Codeanweisungen (E) umgesetzt wird, wenn die folgende Codeanweisung (Inst_3):
- eine Verzweigung ist, oder
- bei ihrer Ausführung durch einen Prozessor (2) der elektronischen Vorrichtung (1) an einer Kommunikation von Daten zwischen der elektronischen Vorrichtung (1) und einer Vorrichtung außerhalb der elektronischen Vorrichtung (1) mitwirkt, oder
- bei ihrer Ausführung durch einen Prozessor (2) der elektronischen Vorrichtung an einem Schreiben von Daten in einen nicht flüchtigen Speicher (8) der elektronischen Vorrichtung mitwirkt.

5. Verfahren nach einem der Ansprüche 3 bis 4, wobei die Integritätsprüfung (114) des Satzes (E) von Codeanweisungen (E) umgesetzt wird, wenn die folgende Codeanweisung (Inst_3) nicht vollständig in einem vorbestimmten Speicherbereich (Z, C) der elektronischen Vorrichtung (1) enthalten ist.

6. Verfahren nach einem der vorstehenden Ansprüche, das weiter Schritte umfasst des
- Berechnens (104), im Laufe der Ausführung des Programms (P), von Integritätsdaten (INT_NVM), die sich auf einen vorbestimmten Speicherbereich (Z, C) der elektronischen Vorrichtung (1) beziehen, welcher den Satz (E) von Codeanweisungen enthält,
- nach dem Ausführen (110) der letzten Codeanweisung (Inst_2) des Satzes (E), Prüfens der Integrität (115) des vorbestimmten Speicherbereichs (Z, C) auf der Basis der Integritätsdaten (INT_NVM), die sich auf den vorbestimmten Speicherbereich (Z, C) beziehen, um ein zweites Ergebnis zu generieren,
- Signalisierens (116) oder Nichtsignalisierens eines Fehlers in Abhängigkeit vom zweiten Ergebnis.

7. Verfahren nach dem vorstehenden Anspruch, das nach dem Ausführen der letzten Codeanweisung (Inst_2) des Satzes (E) das Überprüfen (112) von mindestens einer vorbestimmten Bedingung umfasst, die von einer folgenden Codeanweisung (Inst_3) des Programms (P), die nach der letzten Codeanweisung (Inst_2) ausgeführt werden soll, erfüllt werden kann oder nicht, wobei die Integritätsprüfung (115) des vorbestimmten Speicherbereichs (Z, C) nur dann umgesetzt wird, wenn vor einem Ausführen der folgenden Codeanweisung (Inst_3) durch einen Prozessor (2) der elektronischen Vorrichtung (1) mindestens eine der vorbestimmten Bedingungen erfüllt ist.

8. Verfahren nach einem der Ansprüche 6 bis 7, wobei die Integritätsprüfung (115) des vorbestimmten Speicherbereichs (Z, C) nur dann umgesetzt wird, wenn die Integritätsprüfung (114) des Satzes (E) von Codeanweisungen umgesetzt wird.

9. Verfahren nach einem der vorstehenden Ansprüche, das ein Laden (105) des Satzes (E) von Codeanweisungen von einem vorbestimmten Bereich (Z) eines nicht flüchtigen Speichers (8) der elektronischen Vorrichtung (1) zu einem Cache (C) in einem flüchtigen Speicher (6) der elektronischen Vorrichtung (1) umfasst, wobei die Schritte des Berechnens (108), des Ausführens (110) und des Prüfens der Integrität (114) vom Cache (C) aus umgesetzt werden.

10. Verfahren nach dem vorstehenden Anspruch, das ein Auswählen (103) eines Ausführungsmodus des Satzes (E) von Codeanweisungen aus einer Vielzahl von Ausführungsmodi umfasst, umfassend:
- einen gecachten Ausführungsmodus, wobei das Laden (105) des Satzes (E) von Codeanweisungen in den Cache (C) umgesetzt wird, und wobei die Schritte des Berechnens (108), des Ausführens (110) und des Prüfens der Integrität (114, 115) vom Cache (C) aus umgesetzt werden, und
- einen nicht gecachten Ausführungsmodus, wobei die Schritte des Berechnens (108), des Ausführens (110) und des Prüfens der Integrität (114, 115) direkt vom vorbestimmten Bereich (Z) des nicht flüchtigen Speichers (8) aus umgesetzt werden.

11. Verfahren nach dem vorstehenden Anspruch, das eine Wiederholung des Schritts des Auswählens (103) eines Ausführungsmodus für mindestens eine Codeanweisung des Programms (P) umfasst, die nicht vollständig im vorbestimmten Bereich (Z) des nicht flüchtigen Speichers (8) enthalten ist, wobei der ausgewählte Ausführungsmodus von einer Umsetzung zur anderen variabel ist.

12. Verfahren nach einem der Ansprüche 10 bis 11, wobei das Auswählen (103) des Ausführungsmodus zufällig ist.

13. Verfahren nach einem der vorstehenden Ansprüche, das weiter Schritte umfasst des
- nach dem Ausführen (110) der letzten Codeanweisung (Inst_2) des Satzes (E), Hinzufügens einer folgenden Codeanweisung (Inst_3) des Programms (P) in den Satz (E), die nach der letzten Codeanweisung (Inst_2) ausgeführt werden soll,
- nach dem Hinzufügen (107), iterativen Wiederholens der Schritte des Berechnens (108), des Ausführens (110), und gegebenenfalls des Prüfens der Integrität (114) und des Signalisierens (116).

14. Verfahren nach einem der vorstehenden Ansprüche, das weiter Schritte umfasst des
- nach dem Ausführen (110) der letzten Codeanweisung (Inst_2) des Satzes (E), Neudefinierens (106, 107) des Satzes (E) mit der einzigen folgenden Codeanweisung (Inst_3), wenn die folgende Codeanweisung (Inst_3) nicht vollständig in einem vorbestimmten Speicherbereich (Z, C) der elektronischen Vorrichtung (1) enthalten ist,
- nach dem Neudefinieren (106, 107) des Satzes (E), iterativen Wiederholens der Schritte des Berechnens (108), des Ausführens (110), und gegebenenfalls des Prüfens der Integrität (114) und des Signalisierens (116) .

15. Verfahren nach einem der Ansprüche 13 bis 14, das Schritte umfasst des:
- Speicherns von sich auf den Satz (E) beziehenden Integritätsdaten (X1), die im Laufe einer Umsetzung des Schrittes zum Berechnen (108) von Codeanweisungen berechnet wurden, an einem vorbestimmten Speicherort der elektronischen Vorrichtung (1),
- Speicherns von sich auf den Satz (E) beziehenden Integritätsdaten (X12), die im Laufe einer späteren Umsetzung des Berechnungsschrittes (108) berechnet wurden, an dem vorbestimmten Speicherort, um die zuvor gespeicherten Integritätsdaten (X1) zu ersetzen.

16. Verfahren nach einem der vorstehenden Ansprüche, dessen Schritte von einer virtuellen Maschine hohen Niveaus, wie etwa einer virtuellen Java Card-Maschine umgesetzt werden, wobei das Programm (P) von der virtuellen Maschine hohen Niveaus interpretiert werden kann.

17. Computerprogrammprodukt (M), zum Beispiel vom Typ einer virtuellen Maschine hohen Niveaus, das Programmcodeanweisungen (P) für das Ausführen der Schritte des Verfahrens nach einem der vorstehenden Ansprüche umfasst, wenn dieses Verfahren von mindestens einem Prozessor (2) ausgeführt wird.

## Claims

1. A method for executing a program (P) in an electronic device (1) such as a smart card, comprising steps of:
• computing (108) a first integrity datum (X1, X12) relating to a set (E) of code instructions of the program (P), the set (E) comprising a single code instruction (Inst_1) or a sequence of code instructions (P) to be executed consecutively (Inst_1, Inst_2),
• after computation (108) of the first integrity datum, executing (110) a last code instruction of the set (E) by a processor (2) of the electronic device (1),
• after execution of the last code instruction, checking (114) integrity of the set (E) on the basis of the first computed integrity datum (X1, X12), wherein checking said integrity comprises repeating the computing step (108) to produce a second integrity check datum (X1', X12') relating to the set (E) of code instructions of the program (P), and comparing the first and second integrity check data,
• signaling (116) or not signaling an error as a function of the result of comparison,
the method being **characterized in that** the first integrity datum is computed (108) during execution of the program (P).

2. The method according to the preceding claim, wherein the first integrity datum (X12) is computed (108) after execution by a processor (2) of the electronic device (1):
• of at least one first code instruction of the program (P) by a processor (2) of the electronic device (1), or
• of at least one code instruction (Inst_1) of the set (E) differing from the last code instruction (Inst_2), or
• of each code instruction (Inst_1) of the set (E) except the last code instruction (Inst_2) of the set (E).

3. The method according to one of the preceding claims, comprising:
• after execution of the last code instruction (Inst_2) of the set (E), verifying (112) at least one predetermined condition which may or may not be met by a following code instruction (Inst_3) of the program (P) to be executed after the last code instruction (Inst_2),
• wherein the step of checking integrity (114) is carried out only if at least one of the conditions is met, before any execution of the following code instruction (Inst_3) by a processor (2) of the electronic device (1).

4. The method according to the preceding claim, wherein checking integrity (114) of the set (E) of code instructions (E) is carried out when the following code instruction (Inst_3):
• is a branch, or
• when executed by a processor (2) of the electronic device (1), participates in communication of data between the electronic device (1) and a device external to the electronic device (1), or
• when executed by a processor (2) of the electronic device, participates in writing of data in a non-volatile memory (8) of the electronic device.

5. The method according to one of claims 3 to 4, wherein checking integrity (114) of the set (E) of code instructions (E) is carried out when the following code instruction (Inst_3) is not fully contained in a predetermined memory region (Z, C) of the electronic device (1).

6. The method according to one of the preceding claims, further comprising steps of:
• during execution of the program (P), computing (104) an integrity datum (INT_NVM) relating to a predetermined memory region (Z, C) of the electronic device (1) containing the set (E) of code instructions,
• after execution (110) of the last code instruction (Inst_2) of the set (E), checking integrity (115) of the predetermined memory region (Z, C) on the basis of the integrity datum (INT_NVM) relating to the predetermined memory region (Z, C), to generate a second result,
• signaling or not signaling (116) an error as a function of the second result.

7. The method according to the preceding claim, after execution of the last code instruction (Inst_2) of the set (E), comprising verifying (112) at least one predetermined condition which may or may not be met by a following code instruction (Inst_3) of the program (P) to be executed after the last code instruction (Inst_2), wherein checking integrity (115) of the predetermined memory region (Z, C) is carried out only if at least one of the predetermined conditions is met, before any execution of the following code instruction (Inst_3) by a processor (2) of the electronic device (1).

8. The method according to one of claims 6 to 7, wherein checking integrity (115) of the predetermined memory region (Z, C) is carried out only when the integrity check (114) of the set (E) of code instructions is carried out.

9. The method according to one of the preceding claims, comprising loading (105) of the set (E) of code instructions from a predetermined region (Z) of a non-volatile memory (8) of the electronic device(1) into a cache (C) in a volatile memory (6) of the electronic device (1), wherein the steps of computing (108), executing (110) and checking integrity (114) are carried out from the cache (C).

10. The method according to the preceding claim, comprising selecting (103) an execution mode of the set (E) of code instructions from a plurality of execution modes, wherein the plurality of execution modes comprises:
• a cached execution mode, wherein loading (105) of the set (E) of code instructions into the cache (C) is carried and wherein the steps of computing (108), executing (110) and integrity checking (114, 115) are carried out from the cache (C), and
• a non-cached execution mode, wherein the steps of computing (108), executing (110) and integrity checking (114, 115) are carried out directly from the predetermined region (Z) of the non-volatile memory (8).

11. The method according to the preceding claim, comprising repeating the step of selecting (103) an execution mode for at least one code instruction of the program (P) that is not fully contained in the predetermined region (Z) of the non-volatile memory (8), wherein the selected execution mode varies over time.

12. The method according to one of claims 10 to 11, wherein the selection (103) of the execution mode is random.

13. The method according to one of the preceding claims, further comprising steps of:
• after execution (110) of the last code instruction (Inst_2) of the set (E), adding to the set (E) a following code instruction (Inst_3) of the program (P) to be executed after the last code instruction (Inst_2),
• after adding (107) the following code instruction, iteratively repeating the steps of computing (108), executing (110) and optionally checking integrity (114) and signaling (116).

14. The method according to one of the preceding claims, further comprising steps of:
• after execution (110) of the last code instruction (Inst_2) of the set (E), redefining (106, 107) the set (E) to the only following code instruction (Inst_3) when the following code instruction (Inst_3) is not fully contained in a predetermined memory region (Z, C) of the electronic device (1),
• after redefining (106, 107) of the set (E), iteratively repeating the steps of computing (108), executing (110), and optionally checking integrity (114) and signaling (116).

15. The method according to one of claims 13 to 14, comprising steps of:
• storing an integrity datum (X1) relating to the set (E), computed in the computing step (108) of code instructions, in a predetermined memory location of the electronic device (1),
• storing an integrity datum (X12) relating to the set (E), computed on later implementation of the computing step (108), in the predetermined memory location so as to replace the previously stored integrity datum (X1).

16. The method according to one of the preceding claims, the steps of which are carried out by a high-level virtual machine, such as a Java Card virtual machine, wherein the program (P) is interpretable by the high-level virtual machine.

17. Computer program product (M), for example of high-level virtual machine type, comprising program code instructions (P) for executing steps of the method according to one of the preceding claims, when this method is executed by at least one processor (2).
